# EUROPEAN PATENT APPLICATION

(11) **EP 1 215 789 A1**
(43) Date of publication of application: **19.06.2002**
(21) Application number: 00204576.3
(22) Date of filing: 18.12.2000
(51) Int. Cl.: H02G 5/02

(54) **Busbar device for electrical power**

(71) Applicant: GE Power Controls Belgium, besloten vennootschap met beperkte aansprakelijkheid, 9000 Gent (BE)
(72) Inventor: Forré, Danny, 9940 Evergem (BE); De Buysscher, André, 9700 Oudenaarde (BE)
(74) Representative: Debrabandere, René

(57) **Abstract**

The invention relates to a staircase busbar device for a multiphase electrical power supply or distributing installation, said device comprising a busbar (2) for each phase, insulating supports (3) having a base portion (4) into engagement with a cover portion (5) and connectors (6-7) to fix the two portions (4,5) against each other. A plurality of individual housings (10), each receiving a busbar (2), are formed between the two portions (4,5), the housings (10) being staggered in the width and in the depth to form a staircase structure. Each busbar (2) is composed of at least two flat bars (11) in a good conducting material, which are spaced from each other by at least one spacer (12,12A) situated inside a housing (10) in the supports (3).

## Description

This invention relates to a staircase busbar device for a multiphase electrical power supply or distributing installation, said device comprising a busbar for each phase, insulating supports extending perpendicularly with respect to the longitudinal direction of the busbars and having a base portion into engagement with a cover portion and connectors to fix the two portions against each other, a plurality of individual housings, each receiving a busbar, being formed between the two portions, the housings and thus the busbars being staggered in the width and in the depth to form a staircase structure.

The presence of the stagger allows an easier access for connecting conductors to the contact faces of the busbars than when the busbars are situated in a same plane as for instance in the busbar devices disclosed in DE-A-31.43.518 and DE-U-77.09.147. The electrical switchgear connecting conductors do not require any deformation in order to avoid contact with a busbar of a different phase.

A busbar device with busbars in a staircase disposition is disclosed in EP-A-0.681.355. Single elongated profiled sections, one for each phase, form the busbars. Each profiled section comprises a part with a C-shaped cross section and a flat contact face, to which a connecting conductor can be connected outside the insulating support, connection being performed in a pre-set longitudinal position by means of a connecting device having a screw with its head housed in the C and a nut.

Different shapes and sizes of the conductors are used according to the current intensity.

Due to these special profiled sections, these devices are relatively expensive and have little flexibility. Not only the sections itself are expensive, but moreover, the panelboard builder needs a stock of different sizes and shapes of profiled sections.

The aim of the invention is to obviate this drawback and to offer a busbar device having the advantage of a device with staggered busbars for the phases but which is less expensive and has more flexibility.

In accordance with the invention, this object is accomplished in that each busbar is composed of at least two flat bars in good conducting material, which are spaced from each other by at least one spacer situated inside a housing in the supports.

Standard non-perforated bars in a good conducting material, such as copper, used in classical busbar systems may be used. These standard bars exist in a number of thickness', while in the housing the number of bars may also be varied, for instance three instead of two.

A busbar composed of two or more flat bars is disclosed in the above mentioned DE-U-77.09.147, but the bars are not spaced from each other and, as already mentioned, they are not in staircase disposition.

The housings may be formed exclusively by recesses in the base portion covered by bottom surfaces of the cover portion, the bottoms of the recesses being staggered in the depth.

In order to fill a housing in a support, the busbar device may comprise two or more insulation spacers in a housing.

The spacers have a substantially rectangular section perpendicular to the bars. These spacers present two large flat outer sides parallel to the sides of the bars and two small outer sides in contact with walls limiting the housing.

The spacers may be provided on these small sides with at least one guiding rib entered in a corresponding groove in the walls of the housing.

The spacers may be provided on one end with protrusions extending laterally outside the small sides and abutting against the support.

Connections can be made outside a support between two spaced bars, and the busbar device comprises connection elements inserted between two adjacent bars of a busbar, in electrical contact with these bars and locked on the bars.

In the busbar devices with flat bars according to DE-A-31.43.518 and DE-U-77.09.147, holes have to be made in these bars for the connecting elements.

The connecting elements may be bolts, for example hook-bolts.

The invention will now be described by way of example and with reference to the accompanying drawings, wherein:
Figure 1 is a front view of a portion of a cabinet with a busbar device according to the invention;
Figure 2 shows a section according to line II-II in figure 1 of the support, on a larger scale, before assembling and with only one busbar;
Figure 3 shows a section according to line II-II in figure 1, on a larger scale;
Figure 4 shows a section according to line IV-IV in figure 2;
Figure 5 shows a portion indicated by F5 in figure 3, but with respect to another form of embodiment;
Figure 6 shows a section according to line VI-VI in figure 1, on a larger scale.

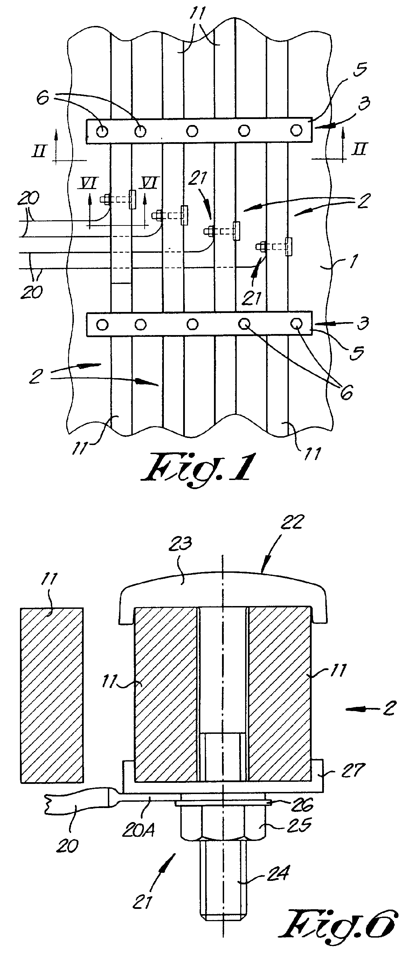

In figure 1, a portion of a wall 1 is shown of an energy distributing system in a low voltage cabinet.

In this cabinet, a busbar device according to the invention is mounted which comprises essentially four busbars 2, one for each phase, which in the example are vertical, and a number of supports 3 in an electrically insulating material such as thermoplastic synthetic material, for these busbars 2.

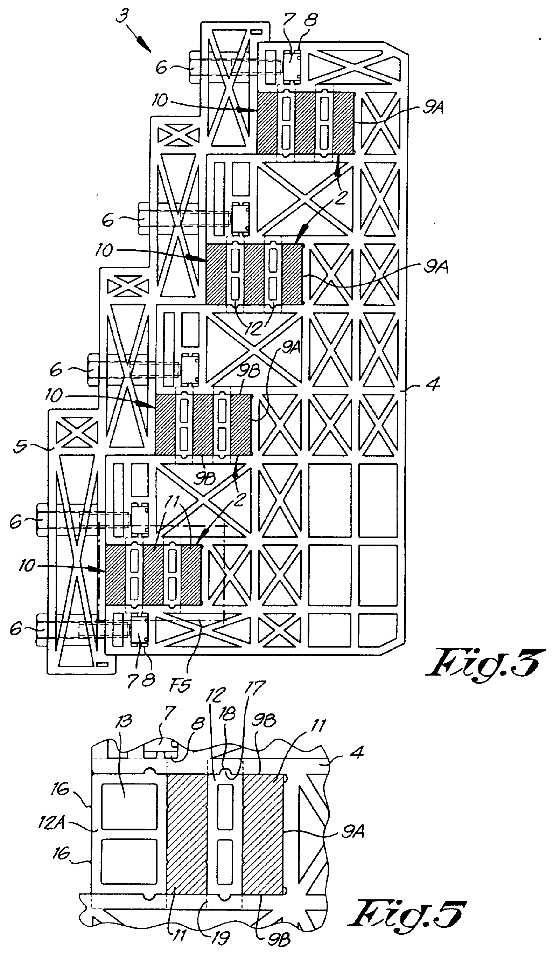

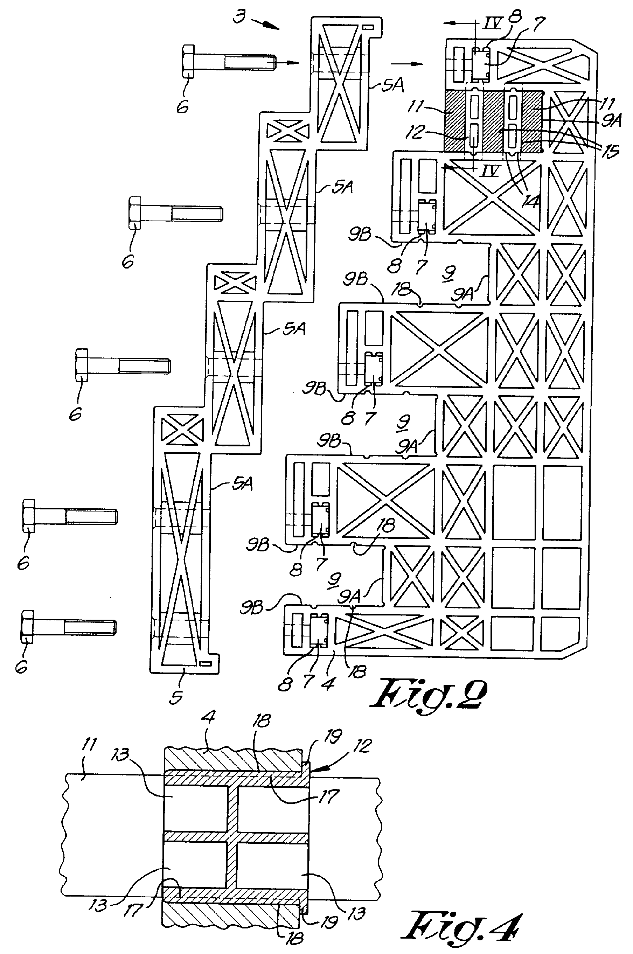

As shown more in detail in figures 2 and 3, each support 3 consists of a base portion 4 and a cover portion 5 fixed to the base portion 4 by means of connectors consisting of bolts 6 traversing the cover portion 5 and screwed in nuts 7 positioned in cavities 8 in the base portion 4.

The base portion 4 is fixed with its bottom on metal profiles that are mounted on mounting profiles fixed to the cabinet walls. The dimension perpendicular to the bottom is called hereafter the depth, while the dimension parallel to the longitudinal direction of the bottom is called hereafter the width.

The base portion 4 is provided at its top side with four identical recesses 9, situated at the same distance one from the other.

As the interface between the base portion 4 and the cover portion 5, this is the contact surface between the top side of the base portion 4 and the underside of the cover portion 5, is shaped as a staircase, the bottoms 9A of the recesses 9 are situated in different planes, staggered in the width direction.

When the cover portion 5 is fixed on the base portion 4, the recesses 9 are closed off by mainly flat bottom surfaces 5A of the cover portion 5, so that a housing 10 is formed for each busbar 2.

This busbar 2 is an assembly comprising at least two flat copper bars 11 and spacers 12 in each support 3, at least between adjacent bars 11, but possibly also between a bar 11 and the bottom 9A of a recess 9 or between a bar 11 and the cover portion 5, the bars 11 and the spacers 12 filling the housing 10 completely.

The bars 11 are standard copper bars having a rectangular section, with the same width but a thickness which may differ depending on the current flowing through the busbar. The recess 9 has the same width as the bars 11 and the bottom 9A of the recess 9 extends parallel to the large longitudinal large sides of the bars 11.

Also the number of bars 11 of a busbar 2 can be freely chosen as far as it is greater than two.

For instance, a busbar 2 may comprise two bars 11 of 30 x 5 mm, two bars 11 of 30 x 10 mm or three bars 11 of 30 x 10 mm.

In the embodiment shown in figure 3, each busbar 2 comprises three bars 11 with a thickness of 10 mm and in a housing 10 in each support 3, two identical spacers 12, one between the bars 11, and one between the other bar 11 and the cover portion 5.

The spacer 12 is made from synthetic insulating material, for instance thermoplastic material, and provided with cavities 13 and has a rectangular section perpendicular to the longitudinal direction of the bars 11. Consequently, the spacer 12 has two parallel small outer sides 14 and two parallel large outer sides 15.

Two small ribs 16 are present on each large outer side 15. These ribs 16 are flattened when the cover portion 5 is fixed to the base portion 4 so to ensure a certain clamping of the spacer 12 in the depth direction of the support 3.

Positioning of the spacer 12 inside a housing 10 is obtained by a guiding rib 17 on each small outer side 14 of the spacer, as shown in figures 3 and 4, said ribs 17 entering a corresponding groove 18 in de inner side of the recess 9.

On each of the lateral inner sides of the recess 9, two such grooves 18 are present extending parallel to the longitudinal direction of the bars 11.

At one end, each spacer 12 is provided on both small sides with outwardly directed lips 19 abutting against one side of the base portion 4 when the spacer 12 is inserted in the recess 9.

In the embodiment shown in figure 3, each busbar 2 comprises only two bars 11 with a thickness of 10 mm and in its housing 10 in each support 3, two different spacers, one spacer 12 between the bars 11, and a thicker one 12A between the other bar 11 and the cover portion 5.

The thickness of the spacer 12A exceeds the thickness of the spacer 12 by the value of the thickness of a bar 11. The ribs 17 are no longer in the middle of the small outer sides 14 but so to fit in grooves 18 in the side walls 9B of the recess 9.

It is obvious that a busbar 2 may comprise as well bars with another thickness than the bars 11 as spacers 12 or 12A with another thickness than said spacers 12 and 12A, as far as the complete thickness of the bars 11 and spacers 12 and/or 12A together corresponds to the depth of a recess 9.

In order to mount the busbars 2, first the bars 11 and spacers 12 and/or 12A of each busbar 2 are put into position in a recess 9 of the base portion 4, whereby the spacers 12 are guided with their ribs 17 in the grooves 18 of the recess 9. When all the busbars 2 are in position, the cover portion 5 is placed on the base portion 4 and is fixed by means of the bolts 6.

Connection to devices such as switches or breakers can be made by connection conductors 20, which can easily be connected to each of the busbars 2 by means of connection means 21 inserted between two adjacent bars 11 of the busbar 2.

As shown in detail in figure 6, a connection means 21 may comprise a hook-bolt 22 having a head 23 gripping over the edges of the two bars 11 and a stem 24 between the two bars 11 and a nut 25 screwed on the opposite side of the bars 11 on the stem 24. A connecting ring 26 in spring steel, surrounding the stem 24, is inserted between the nut 25 and a flattened end 20A of the conductor 20, while a copper plate 27 is situated between the nut 25 and the bars 11.

The nut 25 tightens by the intermediary of the ring 26 the flattened end 20A against the plate 27 and this plate 27 against the edges of the bars 11.

The connections may be made at the front side and accessible from the front of the cabinet.

As the busbars 2 are in a staircase disposition, the advantage is obtained that all contact points are accessible from the front side, what is especially an interesting feature during the mounting or when extensions are made after the installation in the field. Pre-punched holes are not necessary in the bars 11.

The busbars 2 need not necessarily be vertical. They may also be horizontal or in a same cabinet, the busbar device may contain horizontal as well as vertical busbars 2, for example connected to each other. Due to the fact that both the horizontal and the vertical busbars 2 are staggered in the depth direction, such connection may be easily made by flat connection pieces without bends.

The connection element 21 must not necessarily be a hook-bolt. It may be an ordinary bolt and nut connection.

## Claims

1. A staircase busbar device for a multiphase electrical power supply or distributing installation, said device comprising a busbar (2) for each phase, insulating supports (3) extending perpendicularly with respect to the longitudinal direction of the busbars (2) and having a base portion (4) into engagement with a cover portion (5) and connectors (6-7) to fix the two portions (4,5) against each other, a plurality of individual housings (10), each receiving a busbar (2), being formed between the two portions (4,5), the housings (10) and thus the busbars (2) being staggered in the width and in the depth to form a staircase structure, **characterized in that** each busbar (2) is composed of at least two flat bars (11) in a good conducting material, which are spaced from each other by at least one spacer (12,12A) situated inside a housing (10) in the supports (3).

2. The busbar device of claim 1, **characterized in that** the bars (11) are standard non-perforated bars in a good conduction material used in classical busbar systems.

3. The busbar device of claim 1 or 2, **characterized in that** the housings (10) are formed exclusively by recesses (9) in the base portion (4) covered by flat surfaces of the cover portion (5), the bottoms of the recesses (9) being staggered in the depth.

4. The busbar device of either one of the preceding claims, **characterized in that** it comprises at least two spacers (12) in a housing (10).

5. The busbar device of either one of the preceding claims, **characterized in that** the spacers (12,12A) are from insulating material.

6. The busbar device of either one of the preceding claims, **characterized in that** the spacers (12,12A) have a substantially rectangular section perpendicular to the bars (11) and present two large flat outer sides (15) parallel to the sides of the bars (11) and two small outer sides (14) in contact with walls (9B) limiting the housing (10).

7. The busbar device of claim 6, **characterized in that** the spacers (12,12A) are provided on these small outer sides (14) with at least one guiding rib (17) entered in a corresponding groove (18) in the walls of the housing (10).

8. The busbar device of claim 6 or 7, **characterized in that** the spacers (12,12A) are provided on their large outer sides (15) with at least one rib (16) which is flattened when the support portions (4,5) are fixed to each other.

9. The busbar device of either one of claims 6 to 8, **characterized in that** the spacers (12,12A) are provided on one end with protrusions, for instance lips (19), extending laterally outside the small outer sides (14) and abutting against the support (3).

10. The busbar device of either one of claims 1 to 9, **characterized in that** it comprises connection means (21) inserted between two bars (11) of a busbar (2), in electrical contact with these bars (11) and locked on the bars (11).

11. The busbar device of claim 10, in which the connecting means (21) comprise bolts, for example hook-bolts (22), whereon nuts (25) are screwed.
